# EUROPÄISCHE PATENTSCHRIFT

(11) **EP 0 270 189 B1**
(45) Veröffentlichungstag und Bekanntmachung des Hinweises auf die Patenterteilung: **26.05.1993**
(21) Anmeldenummer: 87202377.5
(22) Anmeldetag: 01.12.1987
(51) Int. Cl.: H04M 3/56, H04Q 11/04

(54) **Konferenzschaltung für ein digitales Nachrichtensystem**
Conference circuit for a digital communication system
Circuit de conférence pour système de télécommunication numérique

(30) Priorität: 04.12.1986 DE 3641503
(43) Veröffentlichungstag der Anmeldung: 08.06.1988
(73) Patentinhaber: Philips Patentverwaltung GmbH, 22335 Hamburg (DE); Philips Electronics N.V., 5621 BA Eindhoven (NL)
(72) Erfinder: Weick, Günter, Dipl.-Ing., D-8501 Eckental (DE); Windolf, Lothar, Dipl.-Ing., D-8500 Nürnberg 20 (DE)
(74) Vertreter: Peuckert, Hermann, Dipl.-Ing.

(56) Entgegenhaltungen:
- DE-A- 3 535 221
- GB-A- 2 059 123
- US-A- 4 339 818

## Beschreibung

Die Erfindung betrifft eine Konferenzschaltung für ein digitales Nachrichtensystem, bei dem die Analog-Digital- bzw. die Digital-Analog-Wandler mindestens zweier Teilnehmerendstellen sich in der Brandbreite ihrer verarbeitbaren Analogsignale oder in den Codes der Digitalsignale oder in der Schrittgeschwindigkeit der Digitalsignale unterscheiden können.

Aus der europäischen Patentanmeldung mit der Veröffentlichungsnummer 0 081 799 ist eine Konferenzschaltung für ein digitales Nachrichtensystem bekannt. Diese Konferenzschaltung ist Bestandteil einer Vermittlungsanlage des Nachrichtensystems. Die Teilnehmerendstellen des Übertragungssystems senden ihre Nachrichten in PCM-Worten zu je 8 Bit, wobei die Codewortfolgefrequenz - sie ist identisch mit der Abtastrate der analogen Sprachsignale in den Teilnehmerendstellen - 8 kHz beträgt. Zur Verringerung der Bitrate gegenüber linearer Quantisierung bei nahezu gleichbleibender Sprachqualität werden die Abtastwerte nicht direkt in Codeworte umgesetzt, sondern die Beträge der Abtastwerte werden (angenähert) logarithmiert, die logarithmierten Beträge als Kombination von 7 Bits dargestellt und dann zusammen mit dem Vorzeichenbit als 8-Bit-PCM-Worte übertragen. Die Abtastwerte werden also nach einer nichtlinearen (hier annähernd logarithmischen) Codierkennlinie codiert, oder kürzer und verallgemeinert: sie werden nichtlinear codiert. Geben die PCM-Worte die binär dargestellten Abtastwerte unter Verwendung einer linearen Kennlinie wieder, so wird von einer linearen Codierung gesprochen.

Bei der bekannten Konferenzschaltung ist wegen der nichtlinearen Codierung der PCM-Worte eine Umsetzung (Transcodierung) der von einer Teilnehmerschaltung kommenden PCM-Worte in PCM-Worte linearer Codierung vorgesehen, bevor die (digitalen) Signale aller Konferenzteilnehmer zu Teilsummen zusammengefaßt werden. Die PCM-Worte der Teilsummen werden nichtlinear codiert und dann an die Endstellen der Konferenzteilnehmer übertragen. Unter dem für einen Konferenzteilnehmer bestimmten Teilsummensignal soll im folgenden die Summe der Signale aller anderen Konferenzteilnehmer verstanden werden.

Bei der Einrichtung eines Nachrichtensystems haben die Teilnehmer manchmal die Möglichkeit, zwischen Teilnehmerendstellen unterschiedlicher technischer Ausführung zu wählen. Es entsteht dann ein Nachrichtensystem, bei dem sich die Analog-Digital- bzw. die Digital-Analog-Wandler in der Bandbreite ihrer verarbeitbaren Analogsignale oder in den Codes der Digitalsignale oder in der Schrittgeschwindigkeit der Digitalsignale unterscheiden können.

Der Erfindung liegt die Aufgabe zugrunde, eine Konferenzschaltung anzugeben, mit der jeder Teilnehmer des eben charakterisierten Nachrichtensystems Konferenzen mit anderen Teilnehmern durchführen kann, ohne daß seine Endstelle an die anderen angepaßt werden muß. Zusätzlich soll die Information, die ein Konferenzteilnehmer von den anderen Teilnehmern während der Konferenz erhält, nicht geringer oder verrauschter sein als die Information, die er bei einer Verbindung mit jedem Teilnehmer einzeln erhalten würde.

Diese Aufgabe wird dadurch gelöst, daß der Endstelle eines jeden Konferenzteilnehmers mehrere Transcoder und eine gleiche Anzahl von entsprechenden Transdecodern in der Konferenzschaltung zugeordnet sind, daß die Zahl der Transcoder je Teilnehmerendstelle mit der Zahl der nach den aufgezählten Kriterien unterschiedenen Teilnehmerendstellen übereinstimmt, daß alle Transcoder auf ihrer Sekundärseite ein linear codiertes PCM-Signal abgeben können, das nach Wortlänge und Wortfolgefrequenz geeignet ist, den Informationsinhalt des Teilnehmersignals größter Bandbreite darzustellen, daß das Digitalsignal eines jeden Konferenzteilnehmers mit einem ihm zugeordneten Transcoder in ein linear codiertes PCM-Signal umgesetzt wird, daß alle linear codierten PCM-Signale einer Addierschaltung zugeführt und dorf zu Teilsummensignalen summiert werden und daß die Ausgänge der Addierschaltung derart mit den Transdecodem verbunden sind, daß das für einen Konferenzteilnehmer bestimmte Teilsummensignal über einen ihm zugeordneten Transdecoder an seine Endstelle übertragen wird.

Gegenüber dem Vorschlag, eine Konferenz bei einem eingangs genannten Nachrichtensystem so durchzuführen, daß alle Konferenzteilnehmer sich vorher auf eine bestimmte Bandbreite, einen bestimmten Code und eine bestimmte Schrittgeschwindigkeit einigen, hat die Erfindung den Vorteil, daß jeder Teilnehmer die Endstellenausrüstung seiner Wahl benutzen kann und damit auch ohne Verringerung der Sprachqualität an Konferenzen teilnehmen kann.

Eine weitere Lösung der gestellten Aufgabe ist dem Anspruch 2 zu entnehmen. Anhand der Figuren und anhand zweier Ausführungsbeispiele soll die Erfindung näher erläutert werden.

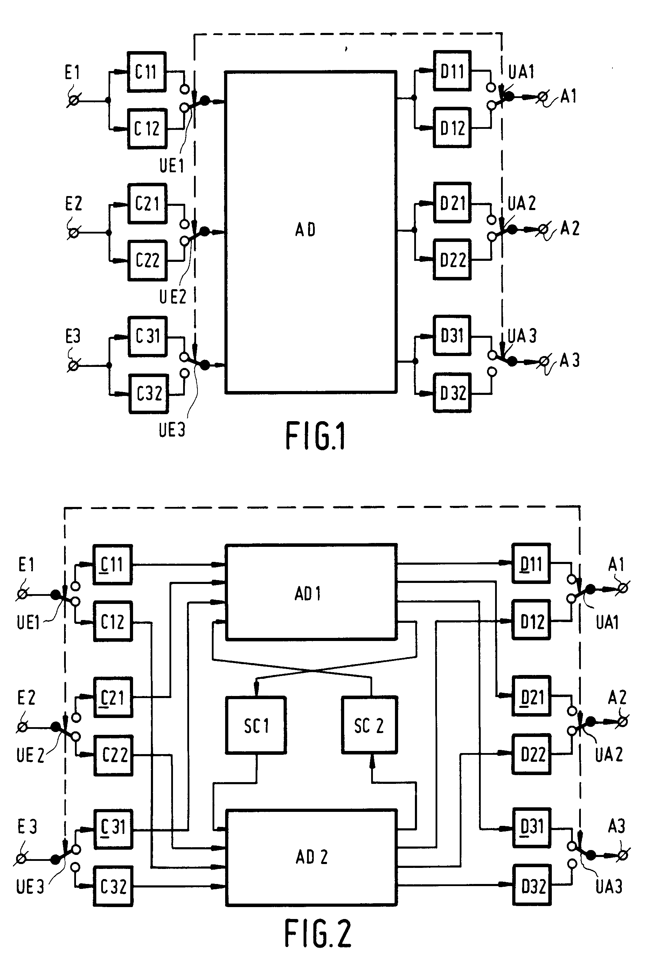

Fig. 1 und Fig. 2 zeigen Prinzipschaltbilder von Konferenzschaltungen mit erfindungsgemäßen Merkmalen.

Bei beiden Beispielen handelt es sich um ein Nachrichtensystem, bei dem manche Endstellen PCM-Signale aus 8-Bit-Codeworten und einer Codewortfolgegrequenz (bzw. Abtastrate) von 8 kHz und andere Endstellen nur ADPCM-Signale (Adaptive Differenz-Pulscode-Modulation) mit einer Abtastrate von 16 kHz und einer Wortlänge von maximal 4 bit verarbeiten können. Die Zahl der Konferenzteilnehmer ist 3.

Nach Fig. 1 sind einem ersten Konferenzteilnehmer die Transcoder C11, C12 und die Transdecoder D11, D12 zugeordnet; sinngemäßes gilt für einen zweiten und einen dritten Konferenzteilnehmer sowie die Transcoder C21, C22, C31, C32 und die Transdecoder D21, D22, D31, D32. Die Transcoder C11, C21 und C31 wandeln nichtlinear codierte 8-Bit-PCM-Worte in 14 Bit lange Codeworte linearer PCM-Codierung um; gleichzeitig wird durch Interpolation und Überabtastung die Wortfolgefrequenz auf 16 kHz erhöht. Die Transcoder C12, C22 und C32 wandeln ADPCM-Signale ebenfalls in 14 Bit lange PCM-Worte linearer Codierung um; die Wortfolgefrequenz beträgt auch hier 16 kHz.

Die Transcoder D11, D21 und D31 machen aus 14 Bit langen PCM-Worten linearer Codierung und mit einer Wortfolgefrequenz von 16 kHz durch Filterung, Unterabtastung und durch neue Quantisierung 8-Bit-PCM-Worte nichtlinearer Codierung mit einer Wortfolgefrequenz von 8 kHz; ebenso machen die Transdecoder D12, D22 und D32 die Wirkung der coder C12, C22 und C32 rückgängig. Ein Transcoder und ein Transdecoder sollen hier "entsprechend" heißen, wenn das Ausgangssignal des Transdecoders mit dem Eingangssignal des Transcoders übereinstimmt, sobald der Transdecoder dem Transcoder nachgeschaltet wird.

Über einem Umschalter UE1 ist einer der Transcoder C11 oder C12 an einen Eingang einer Addierschaltung AD anschaltbar. Gleiches gilt für die Transcoder C21, C22 bzw. C31, C32 und die Umschalter UE2 bzw. UE3. Die Eingänge der Transdecoder D11 und D12 sind mit einem Ausgang der Addierschaltung AD verbunden, ebenso die Eingänge der Transdecoder D21, D22 und D31 und D32. Der Ausgang einer der beiden Transdecoder D11 und D12 kann über einen weiteren Umschalter UA1 an einen Anschluß A1 gelegt werden; über ihn laufen die zum ersten Teilnehmer abgehenden Signale. Entsprechendes gilt für die Transdecoder D21, D22 bzw. D31, D32, für Umschalter UA2 bzw. UA3 und Anschlüsse A2 bzw. A3.

Ist die Konferenzverbindung aufgebaut, so liegen die von den Konferenzteilnehmern kommenden Signale an Klemmen E1, E2 und E3 an. Der erste Teilnehmer sendet seine Nachricht als ADPCM-Signal mit dem oben angegebenen Format aus.

Eine in Fig. 1 nur angedeutete Steuerschaltung verbindet deshalb über dem Umschalter UE1 den Transcoder C12 mit der Addierschaltung AD und den Transdecoder D12 mit dem Anschluß A1. Entsprechendes gilt für den zweiten Teilnehmer, der seine Nachricht ebenfalls in ADPCM mit dem angegebenen Format senden und empfangen kann. Der dritte Teilnehmer verarbeitet nur PCM-Signale in nichtlinearer Codierung, bestehend aus 8-Bit-Codeworten mit einer Folgefrequenz von 8 kHz.

Deshalb ist durch die Steuerschaltung der Transcoder C31 mit der Addierschaltung AD verbunden und der Transdecoder D31 mit dem Anschluß A3. Die Addierschaltung AD bildet nun Teilsummen aus ihren Eingangssignalen, und zwar besteht das für einen Teilnehmer bestimmte Ausgangssignal der Addierschaltung AD aus der Summe der Eingangssignale der beiden anderen Teilnehmer. Im vorliegenden Fall sind z.B. für den ersten Teilnehmer die beiden gerade an der Addierschaltung anliegenden 14-Bit-Codeworte der zweiten und dritten Teilnehmers zu addieren und die Summe an den Ausgang für den ersten Teilnehmer zu geben. Welche Probleme bei der Bildung der Teilsummensignale auftreten können (Überlauf u.a.) und deren Beseitigung izt z.B. in einem Artikel von R. Hofmann (Hofmann, R. : Digitale Telefonkonferenzen. PKI Technische Mitteilungen 1/1986, Seiten 53 bis 56) dargelegt.

In einer Konferenzschaltung nach Fig. 2 sind die Einheiten und Anschlüsse, die die gleichen Funktionen wie in der Konferenzschaltung nach Fig. 1 haben, mit gleichen Bezugszeichen versehen. Der erste der drei Konferenzteilnehmer, deren Sendesignale an den Klemmen E1, E2 und E3 anliegen, sendet seine Nachrichten wieder als ADPCM-Signal in dem schon erwähnten Format aus. Gleiches gilt für den zweiten Teilnahmer, während der dritte nichtlinear codierte PCM-Signale in dem auch schon erwähnten Format verwendet.

Die mit den Bezugszeichen C11, C21 und C31 versehenen Transcoder wandeln nichtlinear codierte PCM-Signale in linearcodierte PCM-Signale von z.B. 12 Bit um. Die entsprechenden Transdecoder sind mit den Bezugszeichen D11, D21 und D31 versehen. Die Transcoder C12, C22, und C32 wandeln die ADPCM-Signale in lineare PCM-Signale mit einer Wortlänge von 14 Bit und einer Wortfolgefrequenz von 16 kHz um.

Jedem Konferenzteilnehmer bzw. seiner Endstelle ist ein Paar von Transdecodern (C11, C12), (C21, C22) und (C31, C32) zugeordnet und ein Paar von entsprechenden Transdecodern (D11, D12), (D21, D22) und (D31, D32).

Eine nicht gezeigte Steuerschaltung bringt die steuerbaren Umschalter UE1, UE2 und UE3 in eine Stellung, in der die von den Endstellen kommenden Signale formal mit denen für die Transcoder vorgesehenen Eingangssignalen übereinstimmen. Sinngemäßes gilt für die Umschalter UA1, UA2 und UA3, die Transdecoder und die an die Endstellen abgehenden Signale.

Die Ausgänge der Transcoder C11, C21 und C31 sind mit den Eingängen einer ersten Addierschaltung AD1 und die Ausgänge der Transcoder C12, C22 und C32 mit den Eingängen einer zweiten Addierschaltung AD2 verbunden. Die Addierschaltung AD1 bildet sämtliche Teilsummen ihrer z.B. 12 Bit-Eingangssignale und die Addierschaltung AD2 sämtliche Teilsummen ihrer 14-Bit-Eingangssignale.

Die Addierschaltung AD2 ist mit der Addierschaltung AD1 wie ein weiterer Teilnehmer verbunden und umgekehrt; ein Ausgang der Addierschaltung AD1 ist über einen Zwischentranscoder SC1 mit einem Eingang der Addierschaltung AD2 verbunden und ein Ausgang der Addierschaltung AD2 ist über einen entsprechenden Zwischentransdecoder SC2 mit einem Eingang der Addierschaltung AD1 verbunden. Der Zwischentransdecoder SC1 wandelt die 12-Bit-PCM-Worte linearer Codierung durch Interpolation und Überabtastung und neue Quantisierung in 14-Bit-PCM-Worte linearer Codierung um. Vor der Umwandlung ist die Wortfolgefrequenz 8 kHz und nach der Umwandlung 16 kHz. Den umgekehrten Prozeß bewirkt der Zwischentransdecoder SC2 durch Filterung und Unterabtastung. Wegen der angegebenen Verknüpfung der Addierschaltungen AD1 und AD2 miteinander, erhält die Addierschaltung AD2 das (umcodierte) Summensignal aller an den Addierer AD1 angeschlossenen Konferenzteilnehmer. Ebenso erhält die Addierschaltung AD1 das (umcodierte) Summensignal aller an die Addierschaltung AD2 angeschlossenen Konferenzteilnehmer. Daher besteht z.B. das dem Eingang des Transdecoders D12 zugeführte und für den ersten Konferenzteilnehmer bestimmte Signal aus der Summe der Signale der beiden anderen Teilnehmer, dargestellt in linearer PCM-Codierung mit Codeworten aus 14 Bit und einer Codewortfolgefrequenz von 16 kHz. Entsprechendes gilt für die anderen Transdecoder.

Die in Fig. 2 dargestellte Schaltung gestattet die Ausnutzung einer eventuell schon vor der Anwendung der erfindungsgemäßen Maßnahmen vorhandenen Addiereinrichtung, sofern diese Einrichtung für Teilnehmer gedacht war, die logarithmisch codierte PCM-Signale oder ADPCM-Signale abgeben.

## Patentansprüche

1. Konferenzschaltung für ein digitales Nachrichtensystem, bei dem die Analog-Digital- bzw. die Digital-Analog-Wandler mindestens zweier Teilnehmerendstellen sich in der Bandbreite ihrer verarbeitbaren Analogsignale oder in den Codes der Digitalsignale oder in der Schrittgeschwindigkeit der Digitalsignale unterscheiden können,
dadurch gekennzeichnet,
daß der Endstelle eines jeden Konferenzteilnehmers mehrere Transcoder (C11, C12; C21, C22; C31, C32) und eine gleiche Anzahl von entsprechenden Transdecodern (D11, D12; D21, D22; D31, D32) in der Konferenzschaltung zugeordnet sind, daß die Zahl der Transcoder je Teilnehmerendstelle mit der Zahl der nach den aufgezählten Kriterien unterschiedenen Teilnehmerendstellen übereinstimmt, daß alle Transcoder (C11...C32) auf ihrer Sekundärseite ein linear codiertes PCM-Signal abgeben können, das nach Wortlänge und Wortfolgefrequenz geeignet ist, den Informationsinhalt des Teilnehmersignals größter Bandbreite darzustellen, daß das Digitalsignal eines jeden Konferenzteilnehmers mit einem ihm zugeordneten Transcoder (C11, C12; C21, C22; C31, C32) in ein linear codiertes PCM-Signal umgesetzt wird, daß alle linear codierten PCM-Signale einer Addierschaltung (AD) zugeführt und dorf zu Teilsummensignalen summiert werden und daß die Ausgänge der Addierschaltung (AD) derart mit den Transdecodem (D11, D12; D21, D22; D31, D32) verbunden sind, daß das für einen Konferenzteilnehmer bestimmte Teilsummensignal über einen ihm zugeordneten Transdecoder (D11, D12; D21, D22; D31, D32) an seine Endstelle übertragen wird.

2. Konferenzschaltung für ein digitales Nachrichtensystem, bei dem die Analog-Digital- bzw. die Digital-Analog-Wandler mindestens zweier Teilnehmerendstellen sich in der Brandbreite ihrer verarbeitbaren Analogsignale oder in den Codes der Digitalsignale oder in der Schrittgeschwindigkeit der Digitalsignale unterscheiden können,
dadurch gekennzeichnet,
daß der Endstelle eines jeden Konferenzteilnehmers mehrere Transcoder (C11, C12; C21, C22; C31, C32) und eine gleiche Anzahl von entsprechenden Transdecodern (D11, D12; D21, D22; D31, D32) in der Konferenzschaltung zugeordnet sind, daß diese Anzahl mit der Zahl der nach den aufgezählten Kriterien unterschiedenen Teilnehmerendstellen übereinstimmt, daß eine ebenso große Anzahl von Addierschaltungen (AD1, AD2) vorgesehen ist, die Teilsummen ihrer Eingangssignale an ihre Ausgänge weiterleiten, daß alle Transcoder (C11, C21, C31; C12, C22, C32), die formal gleiche Eingangssignale umcodieren, auf ihrer Sekundärseite ein linearcodiertes PCM-Signal geringster Bitrate abgeben, das nach Wortlänge und nach Wortfolgefrequenz geeignet ist, den Informationsgehalt des Signals auf ihrer Primärseite darzustellen, und daß die Ausgänge dieser Transcoder (C11, C21, C31; C12, C22, C32) mit Eingängen der gleichen Addierschaltung verbunden sind, daß von je zwei Addierschaltungen (AD1; AD2) ein Ausgang der einen über einen Zwischentranscoder (SC1) bzw. einen entsprechenden Zwischentransdecoder (SC2) mit einem Eingang der anderen Addierschaltung verbunden ist, und daß die Ausgänge einer jeden Addierschaltung (AD1; AD2) an die Eingänge von Transdecodern (D11, D21, D31, SC1; D12, D22, D32, SC2) geführt sind, die den Transcodern (C11, C21, C31, SC2; C12, C22, C32, SC1) entsprechen, die an den Eingängen der Addierschaltung (AD1, AD2) liegen.

## Claims

1. A conference circuit for a digital communication system in which the analog-to-digital and digital-to-analog converters of at least two subscriber terminal stations can be distinguished in the bandwidth of their processable analog signals or in the codes of the digital signals or in the bit rate of the digital signals, characterized in that the terminal station of each conference participant comprises a plurality of transcoders (C11, C12; C21, C22; C31, C32) and an equal number of corresponding transdecoders (D11, D12; D21, D22; D31, D32) in the conference circuit, in that the number of transcoders per subscriber terminal station corresponds to the number of subscriber terminal stations which are different in accordance with the added criteria, in that all transcoders (C11...C32) can supply a linearly coded PCM signal at their secondary end, which signal has a wordlength and word repetition frequency, rendering it suitable for representing the information content of the subscriber signal having the largest bandwidth, in that the digital signal of each conference participant is converted into a linearly coded PCM signal by means of an associated transcoder (C11, C12, C21, C22; C31, C32), in that all linearly coded PCM signals are supplied to an adder circuit (AD) by means of which they are summed to sub-sum signals and in that the outputs of the adder circuit (AD) are connected to the transdecoders (D11, D12; D21, D22; D31, D32) in such a manner that the sub-sum signal intended for a conference participant is transmitted to his terminal station via an associated transdecoder (D11, D12; D21, D22; D31, D32).

2. A conference circuit for a digital communication system in which the analog-to-digital and digital-to-analog converters of at least two subscriber terminal stations can be distinguished in the bandwidth of their processable analog signals or in the codes of the digital signals or in the bit rate of the digital signals, characterized in that the terminal station of each conference participant comprises a plurality of transcoders (C11, C12; C21, C22; C31, C32) and an equal number of corresponding transdecoders (D11 D12; D21, D22; D31, D32) in the conference circuit, in that said number corresponds to the number of the subscriber terminal stations which are different in accordance with the added criteria, in that an equally large number of adder circuits (AD1, AD2) is provided which pass sub-sums of their input signals to their outputs, in that all transcoders (C11, C21, C31; C12, C22, C32) which recede formally equal input signals supply a linearly coded PCM signal of the smallest bit rate at their secondary end, which signal has a wordlength and a word repetition frequency rendering it suitable for representing the information content of the signal at their primary end and in that the outputs of said transcoders (C11, C21, C31; C12, C22, C32) are connected to inputs of the same adder circuit, in that one of each time two adder circuits (AD1, AD2) has an output connected via an intermediate transcoder (SC1) and a corresponding intermediate transdecoder (SC2) to an input of the other adder circuit, and in that the outputs of each adder circuit (AD1; AD2) are connected to the inputs of transdecoders (D11, D21, D31, SC1; D12, D22, D32, SC2) which correspond to the transcoders (C11, C21, C31, SC2; C12, C22, C32, SC1) which are connected to the inputs of the adder circuit (AD1; AD2).

## Revendications

1. Circuit de conférence pour un système de télécommunication numérique dans lequel le convertisseur analogique/numérique et le convertisseur numérique/analogique d'au moins deux postes d'abonnés peuvent se différencier par la largeur de bande de leurs signaux analogiques exploitables ou par les codes des signaux numériques ou encore par le débit numérique des signaux numériques, caractérisé en ce qu'au poste de chacun des abonnés participant à la conférence sont affectés plusieurs transcodeurs (C11, C12; C21, C22; C31, C32) et un nombre égal de transdécodeurs correspondants (D11, D12; D21, D22; D31, D32) dans le circuit de conférence, que le nombre de transcodeurs par poste d'abonné concorde avec le nombre des postes d'abonnés différents d'après les critères énumérés, que tous les transcodeurs (C11 ... C32) peuvent fournir sur leur côté secondaire un signal MIC à codage linéaire, qui convient en longueur de mot et en fréquence de répétition de mots pour représenter le contenu en information du signal d'abonné de plus grande largeur de bande, que le signal numérique de chaque abonné participant à la conférence est converti en un signal MIC à codage linéaire via un transcodeur (C11, C12; C21, C22; C31, C32) qui lui est affecté, que tous les signaux MIC à codage linéaire sont acheminés à un circuit additionneur (AD) et y sont sommés en signaux de sommes partielles et que les sorties du circuit additionneur (AD) sont connectés aux transdécodeurs (D11, D12; D21, D22; D31, D32) d'une manière telle que le signal de somme partielle déterminé pour un abonné participant à la conférence soit transmis à son poste par un transcodeur (D11, D12; D21, D22; D31, D32) qui lui est affecté.

2. Circuit de conférence pour un système de télécommunication numérique dans lequel le convertisseur analogique/numérique et le convertisseur numérique/analogique d'au moins deux postes d'abonnés peuvent se différencier par la largeur de bande de leurs signaux analogiques exploitables ou par les codes des signaux numériques ou encore par le débit numérique des signaux numériques, caractérisé en ce qu'au poste de chacun des abonnés participant à la conférence sont affectés plusieurs transcodeurs (C11, C12; C21, C22; C31, C32) et un nombre égal de transdécodeurs correspondants (D11, D12; D21, D22; D31, D32) dans le circuit de conférence, que le nombre de transcodeurs par poste d'abonné concorde avec le nombre des postes d'abonnés différents d'après les critères énumérés, qu'un nombre égal de circuits additionneurs (AD1, AD2) est prévu, qui transmettent à leurs sorties des sommes partielles de leurs signaux d'entrée, que tous les transcodeurs (C11, C21, C31; C12, C22, C32) qui transcodent des signaux d'entrée formellement identiques fournissent sur leur côté secondaire un signal MIC à codage linéaire de débit binaire très faible qui convient en longueur de mot et en fréquence de répétition de mots pour représenter le contenu en informations du signal sur leur côté primaire, que les sorties de ces transcodeurs (C11, C21, C31; C12, C22, C32) sont connectées à des entrées du même circuit additionneur, que, dans chacun des deux circuits additionneurs (AD1; AD2), une sortie du premier est connectée via un transcodeur intermédiaire (SC1) ou un transcodeur intermédiaire correspondant (SC2) à une entrée de l'autre circuit additionneur, et que, les sorties de chaque circuit additionneur (AD1; AD2) sont acheminées aux entrées de transdécodeurs (D11, D21 D31, SC1; D12, D22, D32, SC2) qui correspondent aux transcodeurs (C11, C21, C31, SC2; C12, C22, C32, SC1) qui sont connectés aux entrées du circuit additionneur (AD1; AD2).
